# EUROPEAN PATENT APPLICATION

(11) **EP 1 748 589 A2**
(43) Date of publication of application: **31.01.2007**
(21) Application number: 06012981.4
(22) Date of filing: 23.06.2006
(51) Int. Cl.: H04H 9/00

(54) **System and method for rewarding a viewer for watching a broadcast programme and broadcast receiver for implementing the method**

(30) Priority: 29.07.2005 KR 2005069545
(71) Applicant: Samsung Electronics Co., Ltd., Suwon-si, Gyeonggi-Do (KR)
(72) Inventor: Lee, Kyong-jong, Suwon-si Gyeonggi-do (KR)
(74) Representative: Grünecker, Kinkeldey, Stockmair & Schwanhäusser Anwaltssozietät

(57) **Abstract**

A broadcasting program watching reward method, a broadcasting program watching reward system, and a broadcasting receiving thereof, are provided. The broadcasting program watching reward method includes checking whether data including reward information on benefits following watching of a broadcasting program are received, when the data are received, extracting the reward information and reward conditions from the data, checking whether the reward conditions are satisfied, and when the reward conditions are satisfied, transmitting a reward condition accomplishment message. A broadcast provider can be configured to reward broadcasting program viewers based on watching records of each viewer, which may be used as marketing means for certain broadcasting programs or a pay channel business policy of a broadcast provider.

## Description

### BACKGROUND OF THE INVENTION

### Field of the Invention

The present invention relates to a system and method for rewarding a user for watching a broadcasting program, and a broadcasting receiver therefor. More particularly, the present invention relates to a system and method for rewarding a user for watching a broadcasting program through interactive communication, and a broadcasting receiver for the broadcasting program watching reward system.

### Description of the Related Art

Along with recent launch of a digital satellite television service, interactive broadcasting service is drawing increasing attention. The so-called interactive service is a two-way service providing information according to user's demand, which is different from a conventional analog television broadcasting service provided by a broadcasting station to television viewers one-way. The interactive service, which mainly uses a digital broadcasting system, not only displays broadcasting contents but also provides data suitable for a command when a user makes the command by pressing a button of a remote controller or touching a screen.

When a user actively requests a broadcasting station for a desired content instead of passively selecting one among contents provided by the broadcasting station, the broadcasting station receives the requests from the user and transmits a corresponding content to a broadcasting receiver of the user.

The selective transmission upon receipt of the selected request of contents generally comes with charge imposed on the user. To promote the interactive service, it is required to provide certain benefits to a user based on how often and how many times a user uses contents.

### SUMMARY OF THE INVENTION

It is, therefore, an object of exemplary embodiments of the present invention to provide a system and method for rewarding a user for watching a broadcasting program through interactive communication, and a broadcasting receiver therefor.

In accordance with an exemplary aspect of the present invention, there is provided a method for rewarding a user for watching a broadcasting program, which comprises checking whether data including reward information on benefits following watching of the broadcasting program are received. When the data are received, the reward information and reward conditions are extracted from the data; checking whether the reward conditions are satisfied, and when the reward conditions are satisfied, a reward condition accomplishment message is transmitted.

According to an exemplary implementation of the present invention, the method further comprises checking whether the data are received or not.

Also, the method may further comprise displaying the reward information and the reward conditions.

Also, the method may further comprise checking whether a reward proposal is accepted or not.

Also, the method may further comprise transmitting a reward proposal rejection message, when the reward proposal is not accepted.

Also, the method may further comprise determining whether the reward conditions are satisfied.

Also, the method may further comprise displaying unfulfilled reward conditions when the reward conditions are not satisfied.

Also, whether the reward conditions are satisfied may be determined based on watching records.

Also, the data may comprise Electric Program Guide (EPG) data.

Watching records may be stored in a non-volatile Random Access Memory (NVRAM).

In accordance with another exemplary aspect of the present invention, there is provided a broadcasting receiver operating based on data transmitted from a broadcast provider. The receiver comprises a data analyzing unit for extracting reward information and reward conditions from the data, when the data which include the reward information are transmitted from the broadcast provider, a state determining unit for checking whether the reward conditions are satisfied, and a transmitting and receiving unit for transmitting a reward condition accomplishment message, when the reward conditions are satisfied.

According to an exemplary implementation of the present invention, the data analyzing unit checks whether the data are received or not.

Also, the broadcasting receiver may further comprise a display unit for displaying the reward information and the reward conditions.

Also, the state determining unit may be configured to check whether a reward proposal is accepted.

Also, when the reward proposal is not accepted, the transmitting and receiving unit may be configured to transmit a reward proposal rejection message.

Also, the state determining unit may be configured to determine whether the reward conditions are satisfied.

Also, when the reward conditions are not satisfied, the display unit may be configured to display unfulfilled reward conditions.

Also, whether the reward conditions are satisfied may be determined based on watching records.

Also, the data may comprise EPG data.

Also, the watching records may be stored in an NVRAM.

In accordance with another exemplary aspect of the present invention, there is provided a broadcasting program watching reward system comprising a broadcast provider for transmitting data including reward information on benefits following watching of a broadcasting program, and a broadcasting receiver which extracts the reward information and reward conditions from the data when the data including the reward information are received from the broadcast provider. The broadcast receiver may be configured to check whether the reward conditions are satisfied, and, when the reward conditions are satisfied, transmit a reward condition accomplishment message to the broadcast provider.

### BRIEF DESCRIPTION OF THE DRAWINGS

The above aspects and features of the present invention will be more apparent by describing certain embodiments of the present invention with reference to the accompanying drawings, in which like reference numerals will be understood to refer to like parts, components and structures, where:

FIG. 1 is a block diagram showing a broadcasting program watching reward system in accordance with an exemplary embodiment of the present invention;

FIG. 2 is a flowchart describing an operation principle of a broadcasting receiver in accordance with an exemplary embodiment of the present invention; and

FIG. 3 is a flowchart illustrating an operation principle of the broadcasting program watching reward system in accordance with an exemplary embodiment of the present invention.

### DETAILED DESCRIPTION OF EXEMPLARY EMBODIMENTS

Certain exemplary embodiments of the present invention will be described in greater detail with reference to the accompanying drawings.

In the following description, as noted above, same drawing reference numerals are used for the same elements throughout. The matters defined in the description such as a detailed construction and certain specific elements are merely illustrative, and provided to assist in a comprehensive understanding of certain exemplary embodiments of the present invention without limiting the scope thereof. Also, well-known functions or constructions are not described in detail for clarity and conciseness.

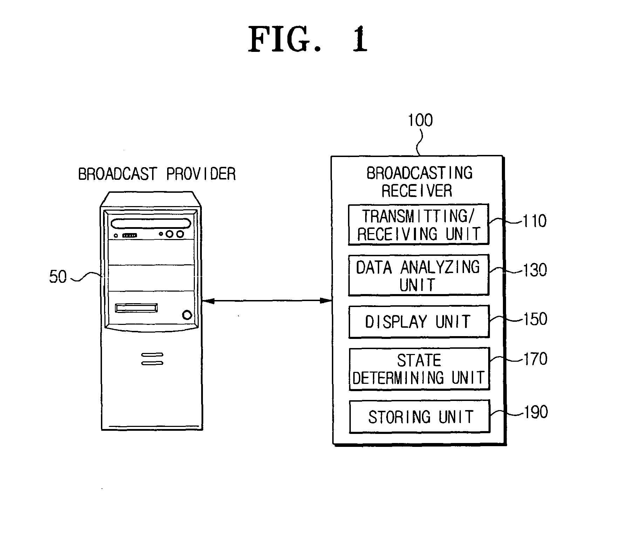

FIG. 1 is a block diagram showing a broadcasting program watching reward system in accordance with an exemplary embodiment of the present invention. Referring to FIG. 1, the broadcasting program watching reward system includes a broadcast provider 50 and at least one broadcasting receiver 100. The broadcasting receiver 100 of the present invention includes a transmitting and receiving unit 110, a data analyzing unit 130, and a display unit 150, a state determining unit 170, and a storing unit 190.

The broadcast provider 50 transmits data including a content requested by the broadcasting receiver 100 and reward information on benefits following the watching of the content.

The broadcasting receiver 100 requests the broadcast provider 50 for a desired content and receives the desired content. The transmitting and receiving unit 110 transmits a content request signal and receives a content corresponding to the content request signal. For example, the transmitting and receiving unit 110 according to an embodiment of the present invention receives data including the reward information on benefits following the watching of the content from the broadcasting receiver 100.

The data analyzing unit 130 extracts reward information and reward conditions from the data including the reward information that the transmitting and receiving unit 110 receives.

The display unit 150 shows a user the reward information and reward conditions extracted by the data analyzing unit 130.

The state determining unit 170 determines whether the reward conditions required for the reward proposed by the broadcast provider 50 are satisfied based on watching records stored in the storing unit 190. The storing unit 190 stores the contents received by the broadcasting receiver 100 and watched by the user and the watching records such as watching time.

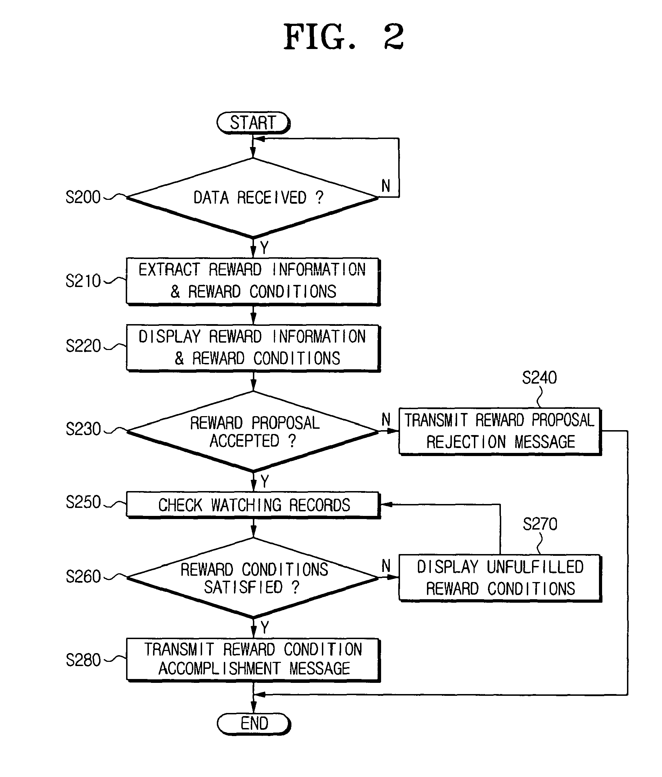

FIG. 2 is a flowchart describing an operation principle of a broadcasting receiver in accordance with an exemplary embodiment of the present invention. Referring to FIGs. 1 and 2, the operation of the broadcasting receiver 100 according to an exemplary implementation of the present invention will be described. First, in step S200, the data analyzing unit 130 checks whether or not the data received in the transmitting and receiving unit 10 include reward information.

In an exemplary embodiment of the present invention, data including the reward information can be Electric Program Guide (EPG) data. For purpose of an exemplary description, the EPG data are assumed to include reward information and/or reward conditions.

The reward information is related to 'what reward should be made' and includes free view coupon for specific pay contents and programs, broadcasting subscription fee discount, extension of a pay watching period, fastfood free coupon and the like. The reward conditions are related to 'what conditions should be satisfied for rewards' and they include such conditions that 'reward is provided to those who watch a predetermined daily program for a week' and that 'reward is provided to those who watch broadcasting programs for a predetermined pay watching period.'

In step S210, the data analyzing unit 130 extracts reward information and reward conditions from the received EPG data. In step S220, the display unit 150 displays the extracted reward information and reward conditions. In response to the display, the user can select whether to accept the reward proposal or not by manipulating the broadcasting receiver 100.

The state determining unit 170 checks whether a reward proposal is accepted by the user or not in step S230. When the user does not accept the reward proposal, the transmitting and receiving unit 110 transmits a reward proposal rejection message to the broadcast provider 50 in step S240.

When the state determining unit 170 determines that the reward proposal is accepted by the user, it checks the watching records of the user in step S250. In an exemplary implementation, the watching records to be checked are stored in the storing unit 190 and the watching records include such items as watching time, and information on the watched contents and programs. In yet another exemplary implementation, the watching records can be stored in a non-volatile Random Access Memory (NVRAM).

In step S260, the state determining unit 170 checks whether the reward conditions transmitted from the broadcast provider 50 are satisfied by inquiring the watching records stored in the NVRAM of the storing unit 190.

As a result, when the reward conditions are not satisfied, the display unit 150 displays unfulfilled conditions still remaining for the user to fully satisfy the reward conditions in step S270. Meanwhile, when the state determining unit 170 determines that the reward conditions are all satisfied, it transmits a reward condition accomplishment message to the broadcast provider 50 in step S280.

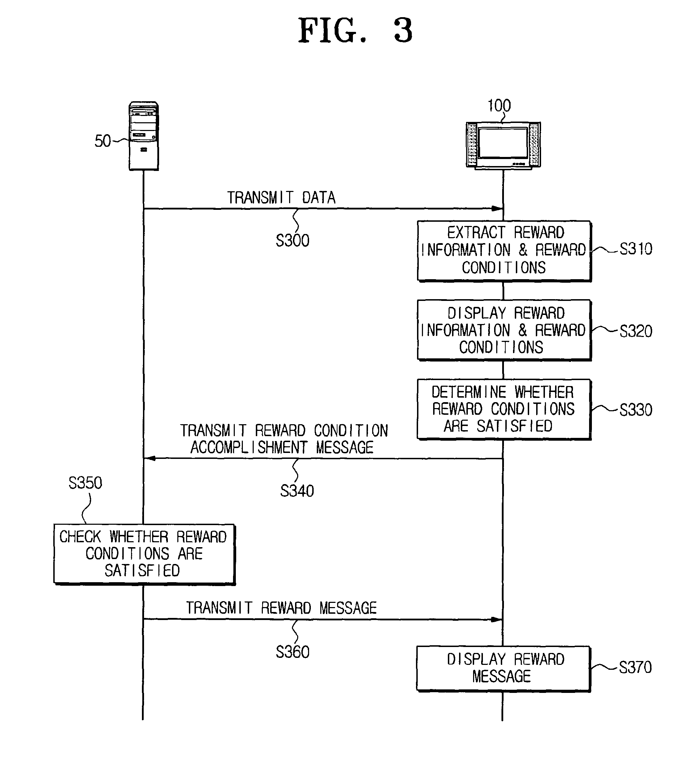

FIG. 3 is a flowchart illustrating an operation principle of the broadcasting program watching reward system in accordance with an exemplary embodiment of the present invention.

Referring to FIGs. 1 and 3, the operation principle of the broadcasting program watching reward system will be described hereinafter. In step S300, the broadcast provider 50 transmits EPG data. Next, the broadcasting receiver 100 receives the EPG data and extracts reward information and reward conditions from the EPG data in step S310.

In step S320, the display unit 130 of the broadcasting receiver 100 displays the reward information and reward conditions. When the user accepts a reward proposal, the state determining unit 170 determines whether the reward conditions are satisfied based on watching records stored in the storing unit 190 in step S330.

When it is determined that the reward conditions are satisfied, the transmitting and receiving unit 110 transmits a reward condition accomplishment message to the broadcast provider 50 in step S340. The broadcast provider 50 which receives the reward condition accomplishment message figures out whether the reward conditions of the broadcasting receiver 100 are satisfied in step S350.

When it is determined that the reward conditions are satisfied, the broadcast provider 50 transmits a reward message including the contents of the reward and how to use the reward program in step S360. Thus, the display unit 150 of the broadcasting receiver 100 displays the reward message transmitted from the broadcast provider 50 in step S370. Thus, the user can know the contents of the reward and how to use the reward program.

In an exemplary embodiment of the present invention, the reward information can be transmitted through a telephone network or the Internet.

Hereinafter, examples of the broadcasting program watching reward system according to exemplary implementations of the present invention will be described. First, an example where the reward condition is 'watching five Video On Demand (VOD) contents' in a VOD watching reward system and the reward information is 'a free coupon for one VOD content.' In step S300, the broadcast provider 50 transmits EPG data including the reward information, in this example - one free coupon for one VOD content, and the reward condition, in this example - watching five Video On Demand (VOD) contents. In step S310, the broadcasting receiver 100 receives the EPG data and extracts the reward information and the reward condition from the EPG data.

Subsequently, the display unit 130 of the broadcasting receiver 100 displays the reward information, in this example - one free coupon for one VOD content, and the reward condition, in this example - watching five Video On Demand (VOD) contents, in step S320. When the user turns down the reward proposal, the broadcasting receiver 100 transmits a reward proposal rejection message to the broadcast provider 50.

When the user accepts the reward proposal, the state determining unit 170 determines in step S330 whether the reward condition is satisfied based on watching records stored in the storing unit 190. In other words, the state determining unit 170 checks how many VOD contents the user has watched so far.

When it is determined that the user has watched three VOD contents so far, the display unit 130 displays the unfulfilled reward condition that should be fulfilled to get the reward, that is, 'two more VOD contents need to be watched.' When the reward condition is satisfied, the transmitting and receiving unit 110 transmits a reward condition accomplishment message to the broadcast provider 50 in step S340, and the broadcast provider 50 which receives the reward condition accomplishment message determines whether the reward condition of the broadcasting receiver 100 is satisfied in step S350.

When it is determined that the reward condition is satisfied, the broadcast provider 50 transmits a reward message including the contents of the reward and how to use the reward program in step S360. In response, the display unit 150 of the broadcasting receiver 100 displays the reward message transmitted from the broadcast provider 50 in step S370. In the meantime, the broadcast provider 50 updates a charge system to allow free watching of one VOD content.

Another example is a case where the reward condition is 'watching of a predetermined program' and the reward information is 'free coupon for fastfood' in a satellite broadcasting program watching reward system using a set-top box. In step S300, the broadcast provider 50 transmits EPG data including the reward information, in this example - 'free coupon for fastfood', and the reward condition, in this example - 'watching of a predetermined program'. In step S310, the broadcasting receiver 100 receives the EPG data and extracts the reward information and the reward condition from the EPG data.

Subsequently, the display unit 130 of the broadcasting receiver 100 displays the reward information, in this example - 'free coupon for fastfood', and the reward condition, in this example - 'watching of a predetermined program' in step S320. When the user turns down the reward proposal, the broadcasting receiver 100 transmits a reward proposal rejection message to the broadcast provider 50.

When the user accepts the reward proposal, the state determining unit 170 determines in step S330 whether the reward condition is satisfied based on watching records stored in the storing unit 190. In other words, the state determining unit 170 checks how many VOD contents the user has watched so far.

When it is determined that the user has not watched the predetermined program, the display unit 130 displays the unfulfilled reward condition that should be fulfilled to get the reward, that is, 'the predetermined program needs to be watched for rewards.' When the reward condition is satisfied, the transmitting and receiving unit 110 transmits a reward condition accomplishment message to the broadcast provider 50 in step S340. In an exemplary implementation of the present embodiment, the transmitting and receiving unit 110 can transmits the reward condition accomplishment message to a call center of the broadcast provider 50 through a modem line.

The broadcast provider 50 which receives the reward condition accomplishment message determines whether the reward condition of the broadcasting receiver 100 is satisfied in step S350.

When it is determined that the reward condition is satisfied, the broadcast provider 50 transmits a reward message including the contents of the reward and how to use the reward program in step S360. In response, the display unit 150 of the broadcasting receiver 100 displays the reward message transmitted from the broadcast provider 50 in step S370. Next, the call center processes work related to the described reward and sends a fastfood free coupon through such means as Intemet e-mail.

As described above, exemplary embodiments of the present invention enable a user who receives a broadcasting program to get reward from the broadcast provider 50 based on the watching records. Also, exemplary implementations of the present invention can be used as marketing means for certain broadcasting programs or a pay channel business policy of a broadcast provider 50.

The foregoing embodiment and advantages are merely exemplary and are not to be construed as limiting the present invention. The present teaching can be readily applied to other types of apparatuses and methods. Also, the description of the exemplary embodiments of the present invention is intended to be illustrative, and not to limit the scope of the claims, and many altematives, modifications, and variations will be apparent to those skilled in the art.

## Claims

1. A method for rewarding a user for watching a broadcasting program, the method comprising the steps of:
checking whether data comprising reward information on benefits associated with watching of the broadcasting program are received;
when the data are received, extracting the reward information and reward conditions from the data;
checking whether the reward conditions are satisfied; and
when the reward conditions are satisfied, transmitting a reward condition accomplishment message.

2. The method as recited in claim 1, further comprising the step of:
determining whether the data are received.

3. The method as recited in claim 1, further comprising the step of:
displaying at least one of the reward information and the reward conditions.

4. The method as recited in claim 1, further comprising the step of:
checking whether a reward proposal is accepted.

5. The method as recited in claim 4, further comprising the step of:
transmitting a reward proposal rejection message when the reward proposal is not accepted.

6. The method as recited in claim 1, further comprising the step of:
determining whether the reward conditions are satisfied.

7. The method as recited in claim 6, further comprising the step of:
displaying unfulfilled reward conditions when the reward conditions are not satisfied.

8. The method as recited in claim 1, wherein the checking whether the reward conditions are satisfied comprises determining based on watching records.

9. The method as recited in claim 1, wherein the data comprises Electric Program Guide (EPG) data.

10. The method as recited in claim 8, wherein the watching records are stored in a non-volatile Random Access Memory (NVRAM).

11. A broadcasting receiver operating based on data transmitted from a broadcast provider, the receiver comprising:
a data analyzing unit for extracting reward information and reward conditions from data when the data comprising the reward information are transmitted from a broadcast provider;
a state determining unit for checking whether the reward conditions are satisfied; and
a transmitting and receiving unit for transmitting a reward condition accomplishment message when the reward conditions are satisfied.

12. The broadcasting receiver as recited in claim 11, wherein the data analyzing unit checks whether the data are received.

13. The broadcasting receiver as recited in claim 11, further comprising:
a display unit for displaying at least one of the reward information and the reward conditions.

14. The broadcasting receiver as recited in claim 11, wherein the state determining unit checks whether a reward proposal is accepted.

15. The broadcasting receiver as recited in claim 14, wherein when the reward proposal is not accepted, the transmitting and receiving unit transmits a reward proposal rejection message.

16. The broadcasting receiver as recited in claim 11, wherein the state determining unit determines whether the reward conditions are satisfied.

17. The broadcasting receiver as recited in claim 16, wherein when the reward conditions are not satisfied, the display unit displays unfulfilled reward conditions.

18. The broadcasting receiver as recited in claim 11, wherein the checking whether the reward conditions are satisfied comprises determining based on watching records.

19. The broadcasting receiver as recited in claim 11, wherein the data comprises Electric Program Guide (EPG) data.

20. The broadcasting receiver as recited in claim 18, wherein the watching records are stored in a non-volatile Random Access Memory (NVRAM).

21. A broadcasting program watching reward system, comprising:
a broadcast provider for transmitting data comprising reward information on benefits associated with watching of a broadcasting program; and
a broadcasting receiver which extracts the reward information and reward conditions from the data when the data comprising the reward information are received from the broadcast provider, checks whether the reward conditions are satisfied, and, when the reward conditions are satisfied, transmits a reward condition accomplishment message to the broadcast provider.
